# EUROPEAN PATENT APPLICATION

(11) **EP 1 013 516 A1**
(43) Date of publication of application: **28.06.2000**
(21) Application number: 99122739.8
(22) Date of filing: 16.11.1999
(51) Int. Cl.: B60R 22/48, B60K 28/02, B60R 25/00

(54) **Safety device for vehicles**

(30) Priority: 21.12.1998 IT MI982755
(71) Applicant: Cesselli, Marco, 21050 Marnate (Varese) (IT); Nerviani, Mauro, 21013 Gallarate (Varese) (IT)
(72) Inventor: Cesselli, Marco, 21050 Marnate (Varese) (IT); Nerviani, Mauro, 21013 Gallarate (Varese) (IT)
(74) Representative: Petruzziello, Aldo

(57) **Abstract**

A safety device for vehicles comprises a coupling device (2), operated from fastening devices (11, 101; 14, 120) of at least one of the vehicle seat belts and moveable from a coupling position that allows the vehicle running when said fastening devices (11, 101; 14, 120) are coupled, to an uncoupling position that halts the vehicle running when said fastening devices are uncoupled; said coupling device (2) acting between the accelerator pedal (5) and the acceleration means(6) and being operated by an electronic circuit positioned in said fastening means (11, 101; 14, 120).

## Description

The present invention refers to a safety device for vehicles, specifically designed to oblige the driver and any passengers to wear seat belts.

Currently, in most parts of the world, the use of seat belts is obligatory in vehicles. Such seat belts safely strap wearers' bodies to the vehicle seats, preventing serious crush injuries to the driver and/or passengers inflicted by the vehicle's interior during a crash or sudden braking.

It has been statistically proved that seat belt wearers, involved in crashes, suffer fewer injuries than individuals not wearing seat belts. Sometimes, seat belt use has proved fundamental in saving passengers' lives. Nevertheless, despite all motor vehicles being fitted with seat belts as standard, many people, partly due to distraction or for comfort reasons, decide not to wear them, thus violating current safety provisions.

The aim of the present invention is to obviate the drawback mentioned above, through the provision of a device which ensures seat belt use in vehicles.

Another aim of the present invention is to provide such a device, which is easy to produce, that does not alter the aesthetic and functional features of vehicles carrying such a device.

These aims are reached, according to the invention, with the characteristics listed in the attached independent claim 1.

Preferred embodiments of the invention emerge from the dependent claims.

The safety device, according to the invention, ensures that when the vehicle seat belts are unfastened, any mechanical, electric or electronic connection between the accelerator pedal, button or lever and the acceleration means, e.g. carburettor throttle valve, is interrupted, thus affecting the running of the vehicle. Connection is regained when the driver puts on his/her seat belt, i.e. when a tab element connected to the belt is inserted into a suitable buckle slot provided at the side of the driver's seat.

In this manner, a driver cannot start the vehicle without first having his/her seat belt fastened. In fact, turning the ignition key starts the engine which is limited to idling speed, and pressing the accelerator pedal will have no effect, since the flow of fuel through the carburettor throttle valve will be minimal, thus preventing the vehicle's running.

Special detectors may be fitted that detect the possible presence of any passengers in the vehicle, in addition to the driver. In this case, if the detectors reveal the presence of passengers, the connection between the accelerator pedal and throttle valve, will remain interrupted and is regained only when the passengers fasten their seat belts.

Should a seat belt be taken off while the vehicle is running, then any possible danger will be avoided. In fact, the vehicle will gradually slow down, similar to the effect experienced when the driver's foot is removed from the accelerator pedal.

A fixed or detachable microchip with a secret code may be installed near the metallic tab part of the driver's seat belt. Appropriately, the buckle will include a decoder designed to come into contact with the tab microchip only when the seat belt has been locked. This decoder decodes the microchip code and activates the connection between the accelerator pedal and the carburettor throttle valve.

In this way any attempt at tampering with the safety device, according to the invention, is avoided, for example the insertion of a thin object in the buckle slot to simulate seat belt closure.

Moreover, the microchip can act as an anti-theft device for the vehicle. In fact, if the user extracts the microchip from the seat belt tab element, a thief would be unable to start the car, even with the ignition key.

As for the categories exempt from the obligatory wearing of seat belts, such as the police authorities or pregnant women, a card could be provided with the microchip incorporated which would simulate correct seat belt closure.

The advantages of the safety device, according to the invention, become apparent from such a brief description. In fact, such a device obliges the driver and passengers of a vehicle to wear seat belts and also acts as a vehicle anti-theft device.

Additional characteristics of the invention will result from the detailed description which follows, referring to a purely illustrative embodiment and therefore non limiting, shown in the enclosed drawings, in which:
Fig. 1 is an operating diagram of the safety device according to the invention;
Fig. 2 is a part sectional view of a coupling device;
Fig. 3 is a plan view of a disc of the coupling device, connected to the vehicle's accelerator pedal by a wire;
Fig. 4 is a plan view of a disc of the coupling device, connected to the means of acceleration by a wire;
Fig. 5 is a part sectional view of a pair of seat belt fastening devices on the passenger's side;
Fig. 6 is a part sectional view of a pair of seat belt fastening devices on the driver's side;
Fig. 7 is a left-hand side view of Fig. 6.

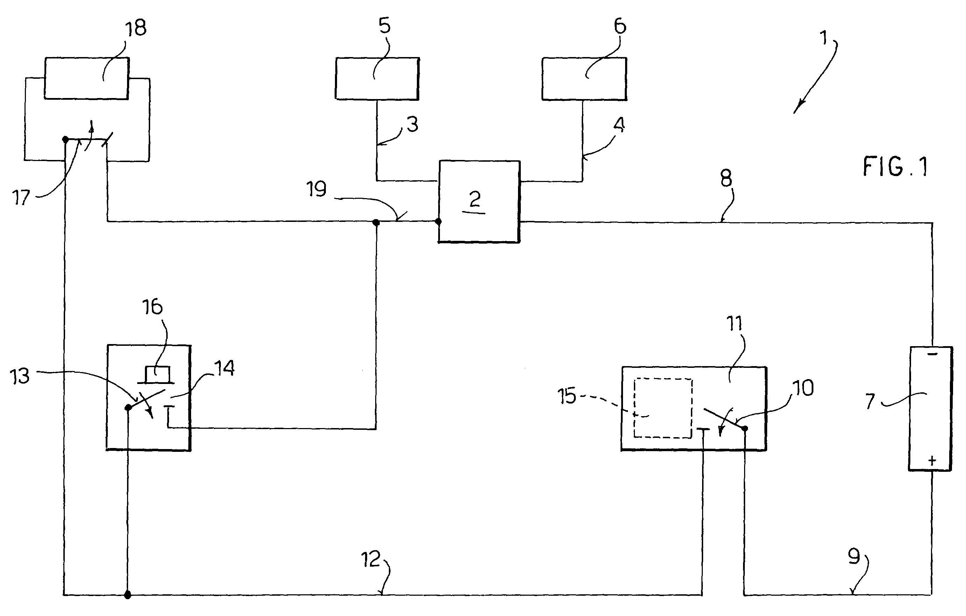

With reference to Fig. 1, a safety device, according to the invention, denoted as a whole by reference number 1, includes a coupling device 2 suitable for connecting or disconnecting two wires or rods 3 and 4 respectively connecting a pedal 5 of the accelerator and an acceleration means, that hereafter will be referred to as the throttle valve 6 of the vehicle carburettor.

The coupling device 2 is controlled by an electronic circuit fed by the vehicle battery 7. The coupling device 2 is connected, by an electric wire 8, to the negative pole of the battery 7. The positive pole of the battery 7 is connected, by an electric wire 9 to a normally open switch 10, located in a buckle 11 for fastening the driver's seat belt. The switch 10 is controlled by a decoder 15 in buckle 11.

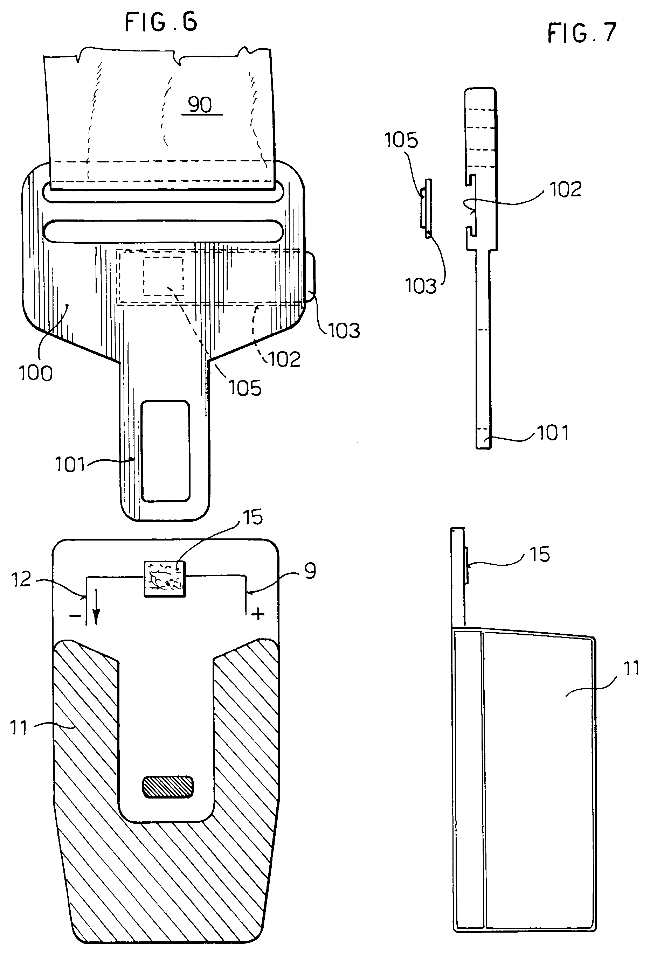

As shown in Fig. 6, the strap 90 of the driver's seat belt includes fastening means 100 ending with a tab 101 which goes into the buckle 11. The fastening means 100 has a slot 102 in which a card 103 may be inserted containing a microchip 105 with a secret code. The card 103 may be removable from the slot 102 or made immovable.

As shown in Fig. 7, when the tab 101 is placed in the slot of buckle 11, the microchip 105 comes into contact with the decoder 15 located in buckle 11. Hence the decoder 15 reads the microchip code 105 and closes the switch 10.

Switch 10 is connected to a normally open switch 13 by an electric wire 12, placed in a buckle 14 for the closure of the passenger's seat belt. The switch 13 is controlled by a pressure contact 16.

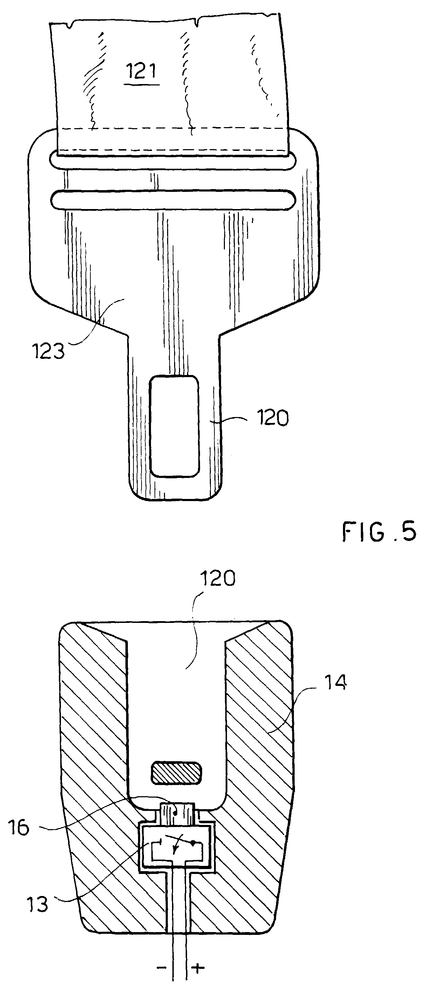

With reference to Fig. 5, a strap 121 of the passenger's seat belt includes a block 123 ending in a tab 120 which fits into a slot 122 of the buckle 14. At the bottom of the slot 122 is the pressure contact 16. Hence, when the tab 120 is inserted into the slot 122, the pressure contact 16 is pressed down, causing closure of switch 13. Naturally, also the pair of fastening means of the driver's seat belt could be made the same as the passenger's belt or vice versa.

A normally closed switch 17 is connected in parallel to switch 13 and controlled by a sensor 18 suitable for detecting a person's presence in the passenger seat. The sensor 18, for instance, could be a pressure sensor set in the passenger seat which is activated when it detects a weight applied to the seat.

The switches 13 and 17 connected in parallel are connected to the coupling device 2 by an electric wire 19. Thus a loop is created from the electric wire 8 to electric wire 19. The coupling device connects wire 3 of the accelerator to wire 4 of the throttle valve, only when the loop is closed.

When the driver's seat belt is not inserted, switch 10 is open, the electric wires 9 and 12 are disconnected, hence no signal is received by the coupling device 2 which keeps the accelerator disconnected from the throttle valve, preventing the vehicle running. If the driver's seat belt is inserted, the decoder 15 controls the closure of switch 10, therefore an electric signal from the battery 7 passes through wires 9 and 12, through switch 17 arriving at wire 19 and therefore to the coupling device 2, which enables the connection between the accelerator pedal and throttle valve, allowing running of the vehicle.

If a person sits in the passenger seat, the sensor 18 detects his/her presence and opens switch 17. As a result of the switches in parallel 13 and 17 being open, the wires 12 and 19 are disconnected, hence the signal is not received by the coupling device 2 and the accelerator pedal 5 will be disconnected from the throttle valve 6. At this stage the passenger must fasten his/her seat belt. In this way the pressure contact device 16 closes switch 13 and the connection between the wires 12 and 19 is restored, therefore the signal is received by the coupling device 2 and the accelerator pedal 5 is reconnected to the throttle valve 6.

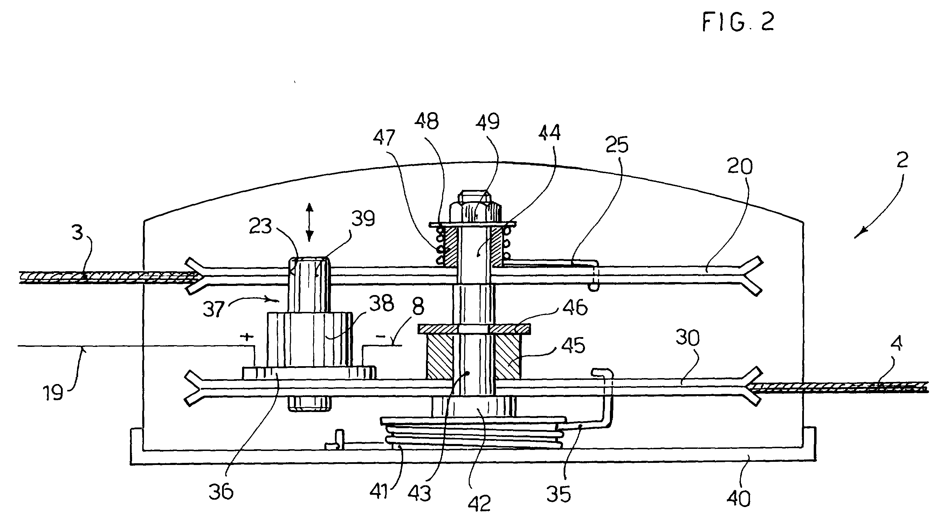

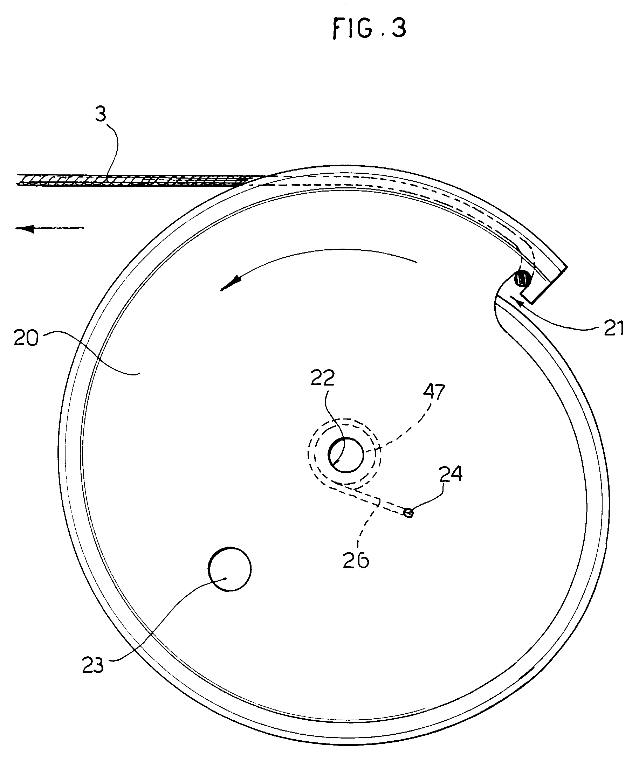

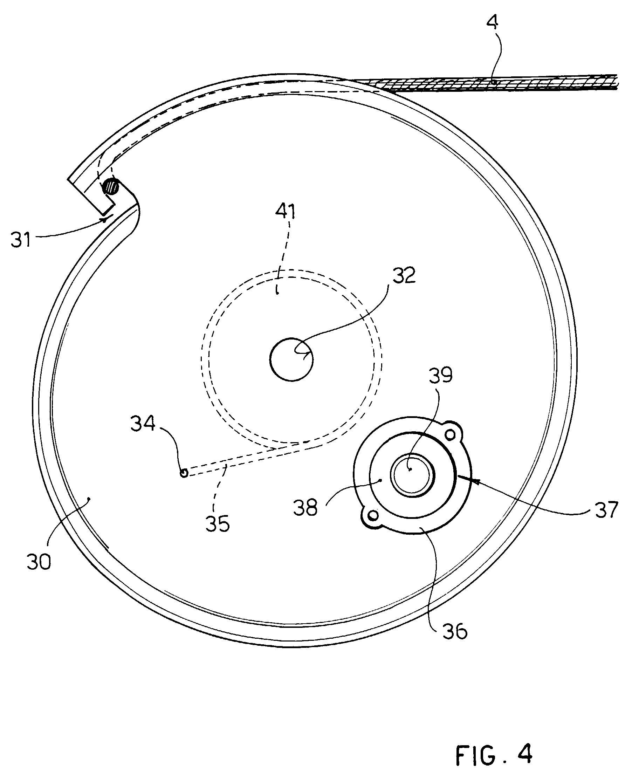

The coupling device 2 is described with reference to Figs. 2, 3 and 4. It includes two substantially identical discs 20 and 30, with two peripheral seatings, respectively 21 and 31 where wire 3 connected to the accelerator pedal and wire 4 connected to the throttle valve are fixed, respectively.

Disc 20 has a through hole 22, located in a central position, a through hole 23 in an offset position and a seating or slot 24 suitable to receive and lock an end part of a spring 25.

Disc 30 has a through hole 32, located in a central position, and a seating 34 suitable to receive an end part of a spring 35. A flange 36 is fixed to disc 30 which supports an electromagnetic actuator 37. The actuator 37 includes a cylinder 38 joined to a piston 39 and is fed by the vehicle battery 7 through electric wires 8 and 19.

The coupling device 2 includes a base plate 40 with a shoulder 41 on which a tang 42 is assembled extended with a cylindrical shaft 43 ending with a shaft 44 of smaller diameter.

Disc 30 is applied with its central hole 32, onto shaft 43 so that it abuts on tang 42 which expressly has an anti-friction surface. The spring 35 winds round shoulder 41 and is fixed to the base plate 40. To avoid axial disc 30 movements, a block 45 made of anti-friction material, e.g. teflon is applied on shaft 43, and is fixed by a retaining ring 46, e.g. a seeger ring or snap ring.

The central hole 22 of disc 20 has a smaller diameter compared to the shaft 43 diameter. In this way, by applying the disc 20 with hole 22 onto shaft 44, the disc 20 stops at the shaft 43 end, remaining separate from disc 30 and on a parallel plane to that of disc 30. To avoid axial shifting of disc 20, a block 47, made of anti-friction material, is applied on shaft 44. The block 47 is locked to the shaft 44 by a retaining ring 48 and a nut 49. The spring 25 is wound round the block 47 and locked to it.

Discs 20 and 30 are idle assembled on the respective shafts 44 and 43. Hence they are spring biased by the respective springs 25 and 35 into a rest position, corresponding to the situation in which the accelerator pedal is not pressed and the throttle valve is open on idling or minimum condition. In this rest position, the axis of piston 39 of the electromagnetic actuator coincides with the axis of hole 23 of disc 20.

If the electromagnetic actuator 37 is energised by supplying an electric signal through wires 19 and 8, the piston 39 moves upwards axially, projects out from the cylinder 38 and enters hole 23 of disc 20. In this operational situation, the discs 20 and 30 are integral with each other. If the accelerator pedal is pressed, with reference to Fig. 2, the wire 3 moves leftwards causing anti-clockwise rotation of disc 20. Disc 30, being integral to disc 20, is also turned anti-clockwise, consequently wire 4 moves leftwards, opening the throttle valve so that the correct amount of fuel flows into the carburettor to start the vehicle.

If the electric signal is not received by the actuator 37, the piston 39 retracts back into cylinder 38 freeing the hole 23 of disc 20, hence the springs 25 and 35 return discs 20 and 30 to the rest position. If the driver presses the accelerator in this situation, wire 3 moves leftwards and disc 20 turns anti-clockwise, but disc 30, being released from disc 20, stays in its rest position, i.e. with the throttle valve open on idling condition.

If the driver fastens his/her seat belt while keeping the accelerator pedal pressed, piston 39 moves upwards, but does not enter hole 23 since disc 20 is turned a certain angle compared to its rest position. The device, according to the invention, therefore proves to be extremely safe, avoiding connections with the accelerator pressed down which would lead to sudden acceleration of the vehicle. In order to have the connection it is obligatory that the accelerator pedal is not pressed.

The coupling device 2 may also be achieved in other ways, for instance, by two magnetically connected plates, or an oil-pressure actuator.

Specific reference has been made to an accelerator pedal 5 in the present description; however the solution, according to the invention, may be applied to any type of accelerator 5, like for instance a manual, lever or button operated accelerator.

In the detailed description of the preferred embodiment of the invention, reference has been made to a mechanical connection by wires or rods 3 and 4 between the accelerator pedal 5 and the acceleration means 6. In cases in which the vehicle is equipped with an electronic acceleration system, i.e. the accelerator pedal 5 is connected to an electronic device that sends electrical signals, e.g. impulses towards the acceleration means 6, the coupling device 2, according to the invention, intervenes by inhibiting the passage of such signals, when the seat belts are unfastened. In this case the coupling device 2 activates or disactivates the passage of electric signals.

Naturally, the invention is not limited to the particular embodiment previously described and illustrated in the enclosed drawings, but numerous modifications to details could be made by a person skilled in the art.

## Claims

1. A safety device for vehicles characterised in that it includes a coupling device (2), operated by fastening devices (11, 101; 14, 120) of at least one of the vehicle seat belts and moveable from a coupling position that allows the vehicle running when said fastening devices (11, 101; 14, 120) are coupled, to an uncoupling position that affects the vehicle running when said fastening devices are uncoupled.

2. A device according to claim 1, characterised in that said coupling device, in said uncoupling position, halts the vehicle running.

3. A device according to claim 1, characterised in that said coupling device (2) acts between a pedal (5) of the accelerator and an acceleration means (6), such as a carburettor throttle valve.

4. A device according to any one of the claims from 1 to 3, characterised in that said coupling device (2) is operated by a signal coming from an electronic circuit positioned in said fastening devices (11, 101; 14, 120) of the seat belts.

5. A device according to claim 4, characterised in that said electronic circuit includes at least one switch (10, 13) suitable to stop the signal transmission when said fastening devices (11, 101; 14, 120) of the vehicle seat belts are unfastened.

6. A device according to claim 5, characterised in that said at least one switch (10, 13) is controlled by at least one decoder (15) and/or at least one pressure contact means (16).

7. A device according to claim 6, characterised in that said decoder (15) is set in a buckle element (11) of said fastening devices of a belt, to be able to decode a secret code imprinted on a microchip which is set in another part or tab (101) of said fastening devices, when the tab (101) is inserted into a buckle slot (11).

8. A device according to claim 6, characterised in that said pressure contact means (16) are situated in a buckle element (14) of said fastening devices in order to be operated by the pressure of a tab element (120) that is inserted into a slot of the buckle (14).

9. A device according to any one of the previous claims, characterised in that sensors (18) are provided suitable for detecting the presence of at least one passenger, apart from the driver, in the vehicle, said sensors operating a switch (17) to stop the signal transmission to the coupling device (2).

10. A device according to any one of the previous claims, characterised in that said coupling device (2) includes an electromagnetic actuator (37).

11. A device according to claim 10, characterised in that said electromagnetic actuator (37) acts by means of a piston (39) in making two discs (20, 30) integral to which are fixed respectively, a wire (3) connected to the pedal (5) of the accelerator and a wire (4) connected to the throttle valve (6).

12. A device according to claim 11, characterised in that said two discs (20, 30) we idle assembled respectively on two coaxial shafts (43, 44) and means are provided (25, 35) acting on said discs (20, 30) to put them in a rest position, in which the accelerator (5) is not pressed and the throttle valve (6) is open on idling or minimum condition.

13. A device according to any one of the claims from 1 to 9, characterised in that said coupling device (2) includes an electronic switch suitable for stopping/allowing the passage of electrical signals to said acceleration means (6), for the driving of the same.
